# EUROPEAN PATENT APPLICATION

(11) **EP 3 993 350 A1**
(43) Date of publication of application: **04.05.2022**
(21) Application number: 19935543.9
(22) Date of filing: 30.12.2019
(51) Int. Cl.: H04L 29/12, H04L 12/24

(54) **METHOD AND DEVICE FOR IP ADDRESS ALLOCATION AND TOPOLOGY MANAGEMENT IN DAS SYSTEM, AND STORAGE MEDIUM**

(30) Priority: 26.06.2019 CN 201910562543
(71) Applicant: Sunwave Communications Co., Ltd., Hangzhou, Zhejiang 310053 (CN)
(72) Inventor: CHEN, Qingsong, Hangzhou, Zhejiang 310053 (CN); XU, Yaxue, Hangzhou, Zhejiang 310053 (CN); REN, Ailin, Hangzhou, Zhejiang 310053 (CN)
(74) Representative: Penza, Giancarlo
(86) International application number: PCT/CN2019/130104
(87) International publication number: WO 2020/258814

(57) **Abstract**

The present disclosure relates to a method and a device for IP address allocation and topology management in a DAS system, and a readable storage medium. The method for IP address allocation and topology management in a DAS system comprises: configuring a port number for a communication port of a host; allocating an address number and one or more port numbers to a first-level slave according to a port number of the host; allocating an address number and one or more port numbers to a next-level slave according to a port number of a previous-level slave; and determining an IP address of a corresponding slave according to a network segment number of the host and the address number of the slave.

## Description

### Technical Field

The present disclosure relates to the technical field of communications, and in particular, to a method and a device for Internet Protocol (IP) address allocation and topology management in a Distributed Antenna System (DAS) system, and a storage medium.

### Background

A DAS generally includes one or more hosts, a plurality of slaves and optional expansion units, wherein one host is used as a control center of the whole DAS system to manage all other hosts, expansion units and slaves. The hosts and the slaves are connected by transmission media such as optical fiber and network cable, and communicate with each other using an IP protocol.

In a conventional implementation, a host allocates an IP address to each slave through a dynamic host configuration protocol (DHCP). The allocation method has some disadvantages: firstly, DHCP is a common protocol in Ethernet, and when DHCP is applied in a DAS system, the IP address allocated by DHCP cannot reflect the topology structure of the slave and the host; secondly, in a case where there are a large number of slaves, the host, as a DHCP Server, may take a long time to allocate an IP address to each slave when the system is initialized.

### Summary

A method and a device for IP address allocation and topology management in a DAS system, and a storage medium are provided. By virtue of the solution provided in embodiments of the present disclosure, the topological location of a slave in a distributed antenna system can be directly acquired according to the IP address of the slave.

A method for IP address allocation in a distributed antenna system is provided. The distributed antenna system comprises a host and multiple levels of slaves connected to the host, and the method comprises:
configuring one or more port numbers for one or more communication ports of the host;
allocating an address number and one or more port numbers to a first-level slave according to a port number of the host;
allocating an address number and one or more port numbers to a next-level slave according to a port number of a previous-level slave, wherein the next-level slave comprises any slave except the first-level slave; and
determining an IP address of a corresponding slave according to a network segment number of the host and the address number of the slave.

In an embodiment, configuring one or more port numbers for one or more communication ports of the host comprises:
acquiring a type of an IP address according to the network segment number of the host of the distributed antenna system; and
configuring, according to the type of the IP address and according to a first preset rule, one or more port numbers for all of the one or more communication ports of the host.

In an embodiment, allocating an address number and one or more port numbers to a first-level slave according to a port number of the host comprises:
allocating the address number to the first-level slave according to the port number of the host; and
configuring one or more port numbers for one or more communication ports of the first-level slave according to the address number of the first-level slave.

In an embodiment, allocating the address number to the first-level slave according to the port number of the host comprises:
using the port number of a port, to which the first-level slave is connected, of the host as the address number of the first-level slave.

In an embodiment, configuring one or more port numbers for one or more communication ports of the first-level slave according to the address number of the first-level slave comprises:
in a case where the first-level slave is an expansion unit, configuring one or more port numbers for all of the one or more communication ports of the expansion unit according to a second preset rule; and
in a case where the first-level slave is a remote unit, configuring a port number for a communication port of the remote unit according to a third preset rule.

In an embodiment, allocating an address number and one or more port numbers to a next-level slave according to a port number of a previous-level slave comprises:
allocating the address number to the next-level slave according to the port number of the previous-level slave; and
configuring one or more port numbers for one or more communication ports of the next-level slave according to the address number of the next-level slave.

In an embodiment, after determining an IP address of a corresponding slave according to a network segment number of the host and the address number of the slave, the method further comprises:
acquiring IP addresses of a plurality of slaves; and
acquiring topological locations of the plurality of slaves according to the IP addresses of the plurality of slaves.

In an embodiment, after acquiring topological locations of the plurality of slaves according to the IP addresses of the plurality of slaves, the method further comprises:
reading topological locations of the plurality of slaves managed by the host;
generating a topological structure diagram of the distributed antenna system according to the topological locations; and
configuring a route jumping function of the host and the plurality of slaves, so as to acquire graphical user interfaces corresponding to the plurality of slaves according to the topological structure diagram.

A method for IP address allocation in a distributed antenna system is provided. The distributed antenna system comprises a host and multiple levels of slaves connected to the host, and the method comprises:
determining a designated slave of the multiple levels of slaves;
allocating an address number and one or more port numbers to the designated slave;
allocating, according to a port number of the designated slave, an address number and one or more port numbers to a next-level slave of the designated slave; and
determining IP addresses of the designated slave and the next-level slave according to a network segment number of the host, the address number of the designated slave and the address number of the next-level slave.

In an embodiment, allocating an address number and one or more port numbers to the designated slave comprises:
acquiring a port number allocated to a previous-level slave of the designated slave; and
allocating the address number and the one or more port numbers to the designated slave according to the port number of the previous-level slave.

In an embodiment, allocating an address number and one or more port numbers to the designated slave comprises:
determining whether the designated slave is a first-level slave of the multiple levels of slaves; and
in a case where the designated slave is the first-level slave, allocating the address number and the one or more port numbers to the designated slave according to a port number of the host.

A device for IP address allocation in a distributed antenna system is provided. The distributed antenna system comprises a host and multiple levels of slaves connected to the host, and the device comprises:
a configuration module, adapted to configure one or more port numbers for one or more communication ports of the host;
a first allocation module, adapted to allocate an address number and one or more port numbers to a first-level slave according to a port number of the host; and
a second allocation module, adapted to allocate an address number and one or more port numbers to a next-level slave according to a port number of a previous-level slave, wherein the next-level slave comprises any slave except the first-level slave; and
a determination module, adapted to determine an IP address of a corresponding slave according to a network segment number of the host and the address number of the slave.

A non-volatile storage medium is provided. A data processing program is stored in the non-volatile storage medium, and the data processing program is used for enabling a computer to perform the method described above.

The method and the device for IP address allocation and topology management in a DAS system, the computer device and the computer-readable storage medium provided in the embodiments of the present disclosure comprise: configuring one or more port numbers for one or more communication ports of the host; allocating an address number and one or more port numbers to a first-level slave according to a port number of the host; allocating an address number and one or more port numbers to a next-level slave according to a port number of a previous-level slave; and determining an IP address of a corresponding slave according to a network segment number of the host and the address number of the slave. In the method for IP address allocation and topology management in a DAS system, an IP address is allocated to a slave according to a port number of a port to which the slave is connected, so that the topological location of the slave in the distributed antenna system can be directly acquired according to the IP address of the slave.

### Brief Description of the Drawings

To describe the technical solutions in the embodiments of the present disclosure or in the related art more clearly, the following briefly introduces the accompanying drawings required for describing the embodiments or the related art. Obviously, the accompanying drawings in the following description show merely some embodiments of the present disclosure, and a person having ordinary skill in the art may still derive other drawings from these accompanying drawings without inventive efforts.
Fig. 1 is a flowchart of a method for IP address allocation and topology management in a DAS system according to an embodiment;
Fig. 2 is a flowchart of a method for IP address allocation and topology management in a DAS system according to another embodiment;
Fig. 3 is a structural block diagram of a device for IP address allocation and topology management in a DAS system according to an embodiment.

### Detailed Description of the Embodiments

In order to facilitate understanding of the present disclosure, and in order to make the described objects, features and advantages of the present disclosure more obvious and easy to understand, the exemplary embodiments of the present disclosure will be described in detail below in conjunction with the accompanying drawings. In the following description, numerous specific details are illustrated to provide a thorough understanding of the present disclosure, and exemplary embodiments of the present disclosure are shown in the accompanying drawings. The present disclosure may, however, be embodied in many different forms and is not limited to the embodiments described herein. Rather, the purpose of providing these embodiments is to make the understanding of the disclosure of the present disclosure more thorough and comprehensive. The present disclosure may be embodied in many other ways than those described herein, and a person having ordinary skill in the art may make similar modifications without departing from the scope of the present disclosure, and thus the present disclosure is not limited to the exemplary embodiments disclosed below.

In addition, terms such as "first" and "second" are used herein for purposes of description and cannot be construed as indication or implication of relative importance or implicit indication of the number of specified technical features. Thus, the features defined by "first" and "second" may explicitly or implicitly include at least one of the features. In the description of the embodiments of the present disclosure, the meaning of "a plurality of" is at least two, for example, two, three, etc., unless specifically defined otherwise. In the description of the present disclosure, the meaning of "several" is at least one, for example, one, two, etc., unless specifically defined otherwise.

Unless defined otherwise, all technical and scientific terms used herein have the same meaning as commonly understood by a person having ordinary skill in the art to which the present disclosure belongs. The terminology used herein is for the purpose of describing exemplary embodiments only, and is not intended to be limiting of the present disclosure. As used herein, the term "and/or" includes any and all combinations of one or more of the associated listed items.

A DAS is a network of spatially separated antenna nodes. The spatially separated antenna nodes are connected to a public node via a propagation medium that provides wireless service in a geographic area or structure. The public wireless communication system uses a host 110 located at a central location (e. g., located at a facility that is controlled by a certain wireless service provider) as a public node; and antenna nodes and related broadcasting and receiving devices located remotely from the host 110 (e. g., located at a facility or network point that is not controlled by the wireless service provider) are referred to as remote units. The DAS typically comprises one or more main units and one or more remote units, with only one of the main units acting as a host 110 to manage the other remote units as a control center for the entire DAS. The remote units are communicatively connected to the main unit directly or indirectly through one or more expansion units, and use an IP protocol to perform communication, so as to implement bidirectional communication between a DAS service area and wireless user units in a communication network. In the embodiments of the present disclosure, both the expansion units and the remote units are referred to as slaves 120, and the slaves 120 directly connected to the host 110 are referred to as first-level slaves 121.

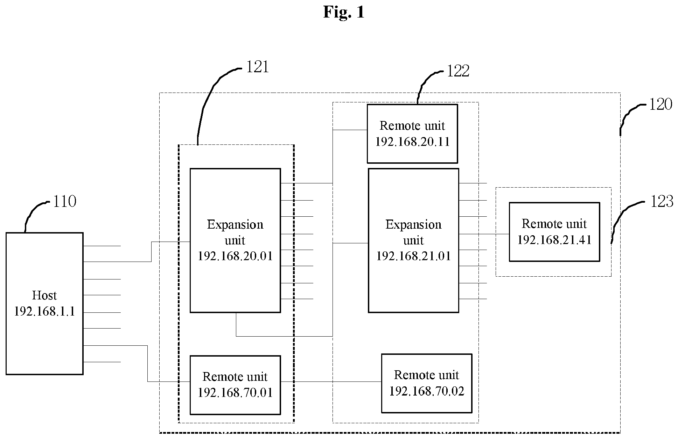

Fig. 1 is a flowchart of a method for IP address allocation and topology management in a DAS system according to an embodiment, the DAS system comprising a host 110 and multiple levels of slaves 120 connected to the host 110. As shown in Fig. 1, the method for IP address allocation and topology management in a DAS system comprises operation 210 to operation 240, wherein:

At 210, one or more port numbers are configured for one or more communication ports of the host 110.

The host 110 allocates a port number to each communication port, and sends the port number through an underlying protocol such as Common Public Radio Interface (CPRI).

In an embodiment, the operation that one or more port numbers are configured for one or more communication ports of the host 110 comprises: a type of an IP address is acquired according to the network segment number of the host of the distributed antenna system; and one or more port numbers are configured, according to the type of the IP address and according to a first preset rule, for all of the one or more communication ports of the host 110.

Specifically, before the one or more port numbers are configured for the one or more communication ports of the host 110, the type of the IP address can be acquired first according to a network segment number of the host 110 of the distributed antenna system. At present, the IP address is a 32-bit address, expressed in dotted decimal notation, such as 172.16.0.0. The address format is: IP address = network address + address of the host 110. The IP address is mainly divided into three types according to different network addresses, which are respectively Class A IP address, Class B IP address and Class C IP address. The Class-A IP address consists of a 1-byte network address and a 3-byte address of the host 110, the most significant bit of the network address is regulated to be 0, and the address range is from 1.0.0.0 to 126.0.0.0. The Class B IP addresses consist of a 2-byte network address and a 2-byte address of the host 110, the most significant bit of the network address is regulated to be "10", and the address range is 128.0.0.0 to 191.255.255.255. The Class C IP address consists of a 3-byte network address and a 1-byte address of the host 110, the most significant bit of the network address is regulated to be 110, and the range is from 192.0.0.0 to 223.255.255.255. It can be understood that the network segment number of the host 110 is a network address. In the embodiments of the present disclosure, the Class B IP address is taken as an example for description, that is, the last two bytes of the IP address represent the address of the host 110, and a port number is allocated to each communication port of the host 110 according to the two-byte address of the host 110. It should be understood that, in other embodiments, other types of IP addresses may also be used.

Assuming that the host 110 has eight communication ports in total, a first preset rule is used to allocate port numbers to all the communication ports. The first preset rule may be to allocate port numbers to respective communication ports sequentially according to the order of the ports. For example, the port numbers of the eight communication ports are respectively configured as 10.01, 20.01, 30.01,...80.01. The port number 10.01 is the port number for the first communication port, the port number 20.01 is the port number for the second communication port, and so on, and the port number 80.01 is the port number for the eighth communication port.

At 220, an address number and one or more port numbers are allocated to a first-level slave 121121 according to a port number of the host 110.

In an embodiment, the address number is allocated to the first-level slave 121 according to a port number of the host 110, and then one or more port numbers are configured for one or more communication ports of the first-level slave 121 according to the address number of the first-level slave 121.

The first-level slave 121 is directly connected to the host 110, and the first-level slave 121 receives, by using an underlying protocol such as CPRI, the port number delivered by the host 110 as an address number of the first-level slave 121. Assuming that the first-level slave 121 is connected to the second communication port of the host 110, the address number of the first-level slave 121 is 20.01, that is, the port number of the host 110 is directly used as the address number of the first-level slave 121 connected to the port.

In an embodiment, after the address number is allocated to the first-level slave 121, one or more port numbers are configured for one or more communication ports of the first-level slave 121 according to the type of the first-level slave 121. The types of the first-level slave 121 comprise an expansion unit and a remote unit.

In a case where the first-level slave 121 is an expansion unit, port numbers are configured for all communication ports of the expansion unit according to a second preset rule. Specifically, in a case where the address number of the expansion unit (the first-level expansion unit) which is a first-level slave is 20.01, the expansion unit has eight lower-level ports and one cascade port, wherein the lower-level ports are connected to next-level remote units (the second-level remote units), and the cascade port is connected to a next-level expansion unit (the second-level expansion unit). Then, the port numbers of the eight lower-level ports can be allocated as 20.11, 20.21, 20.31,... 20.81 respectively, and the port number of the cascade port is allocated as 21.01.

In a case where the first-level slave 121 is a remote unit, a port number is configured for a communication port of the remote unit according to a third preset rule. Specifically, in a case where the address number of the remote unit (i.e., the first-level slave 121) is 70.01, the remote unit has one lower-level port, and the port number of the lower-level port can be allocated as 70.02.

In the embodiment, a slave 120 can respectively allocate one or more port numbers to one or more next-level slaves 120 according to the address number of the slave 120, and according to this method for allocation, each slave 120 will have a unique address number.

At 230, an address number and one or more port numbers are allocated to a next-level slave according to a port number of a previous-level slave.

Specifically, the address number is allocated to the next-level slave according to the port number of a previous-level slave, and then one or more port numbers are configured for one or more communication ports of the next-level slave according to the address number of the next-level slave. Referring to Fig. 1, the address number of the first-level expansion unit is 20.01, the expansion unit has eight lower-level ports, the lower-level ports are connected to second-level remote units, and the eight lower-level ports are connected to eight remote units. The port numbers of the eight lower-level ports are 20.11, 20.21, 20.31,... 20.81 respectively, and the eight port numbers may be directly used as the address numbers of the eight second-level remote units connected to the first-level expansion unit. The address number of a second-level remote unit connected to the lower-level port of which the port number is 20.11 may be 20.11, the address number of a second-level remote unit connected to the lower-level port of which the port number is 20.21 may be 20.21, and so on, and the address number of a second-level remote unit connected to the lower-level port of which the port number is 20.81 may be 20.81. After the address numbers are allocated to the second-level remote units, the port numbers for communication ports of the second-level remote units are configured according to the address numbers of the second-level remote units. The specific configuration manner may refer to the manner in which the first-level slave 121 configures the port number according to the address number, and is not described again in this embodiment.

In a case where the address number of the first-level expansion unit is 20.01, the expansion unit has one cascade port, the cascade port is connected to a second-level expansion unit, and the address of the second-level expansion unit is 21.01. After the address number is allocated to the second-level expansion unit, the port number for a communication port of the second-level expansion unit is configured according to the address number of the second-level expansion unit. Referring to Fig. 1, the second-level expansion unit has eight lower-level ports, and the port numbers for the eight lower-level ports may be configured as 21.11, 21.21, 21.31, 21.41,... 21.81, and the port number of the second-level slave 122 may be used as the address number of a communication port of a third-level slave 123. For example, the address number of a remote unit connected to the lower-level port of which the port number is 20.41 may be 21.41.

At 240, an IP address of a corresponding slave is determined according to a network segment number of the host and the address number of the slave.

The host 110 delivers the network segment number of the host 110, for example, 192.168. x.x, to all the slaves through an underlying protocol such as CPRI, and the IP address of the host 110 is set to 192.168.1.1. Each slave acquires the network segment number of the host 110 through the underlying protocol such as CPRI, and constructs a complete IP address according to the address number of the slave. Assuming that the address number of the slave is 42.21, the IP address of the slave is 192.168.42.21. According to this method, each slave has a unique IP address, which corresponds to the topological structure of the distributed antenna system. When a slave accesses the distributed antenna system, an IP address corresponding to the topological structure can be automatically acquired.

According to the described IP address allocation method, when a slave accesses a distributed antenna system, the slave can automatically acquire an IP address corresponding to the topological structure. The host 110 can infer the location of a slave in the topology according to the IP address of the slave, and can display the topology through a graphical user interface (GUI), which is convenient to use.

In the method for IP address allocation and topology management in a DAS system provided in the embodiment, one or more port numbers are configured for one or more communication ports of a host 110; an address number and one or more port numbers are allocated to a first-level slave 121 according to a port number of the host 110; an address number and one or more port numbers are allocated to a next-level slave according to a port number of a previous-level slave; and an IP address of a corresponding slave is determined according to a network segment number of the host 110 and the address number of the slave. In the method for IP address allocation and topology management in a DAS system, an IP address is allocated to a slave according to a port number of a port to which the slave is connected, so that the topological location of the slave in the distributed antenna system can be directly acquired according to the IP address of the slave.

In an embodiment, the method for IP address allocation and topology management in a DAS system further comprises: the host 110 acquires IP addresses of a plurality of slaves, and acquires, according to the IP addresses of the plurality of slaves, topological locations of the plurality of slaves.

The host 110 may manage and display the topology of the multiple levels of slaves. Specifically, after an IP address is allocated to a slave, the slave will automatically report the IP address and other information of the slave to the host 110, and the host 110 infers the location of the slave in the topological structure diagram according to the IP address of the slave. The host 110 manages a slave list, and updates the topological location, connection state and other information of the slave to the slave list in real time. The GUI may query the list of the host 110 through commands, display each slave at a corresponding position on the topological structure diagram according to the topological location information of each slave in the list, and finally present a complete topological structure diagram of the system.

In an embodiment, the method of IP address allocation and topology management in a DAS system further comprises: when the topological location of a slave 120 is updated, the host 110 acquires an updated topological location of the slave 120.

The host 110 has a function of automatically reporting a topology update. When there is a slave change, for example, accessing of a new slave 120, disconnecting of a slave 120 or changing of the connection position of a slave 120, etc., in the DAS, the host 110 can update the slave list in real time and automatically report a topology update message to the GUI, thereby solving the problem that the GUI topology is not updated in a timely manner.

In an embodiment, the method for IP address allocation and topology management in a DAS system further comprises: topological locations of a plurality of slaves 120 stored in a host 110 are read, and a topological structure diagram of the distributed antenna system is generated according to the topological locations.

Route jumping functions of the host 110 and the plurality of slaves 120 are configured, so as to acquire graphical user interfaces corresponding to the plurality of slaves 120 according to the topological structure diagram.

The host 110 and the slaves are respectively configured with a route jumping function, so as to realize flexible switching between GUI interfaces of the host 110 and the slaves. When the icon of any slave 120 on the topology diagram is clicked, the displayed content can automatically jump to the corresponding GUI interface of the slave 120, which is convenient to use.

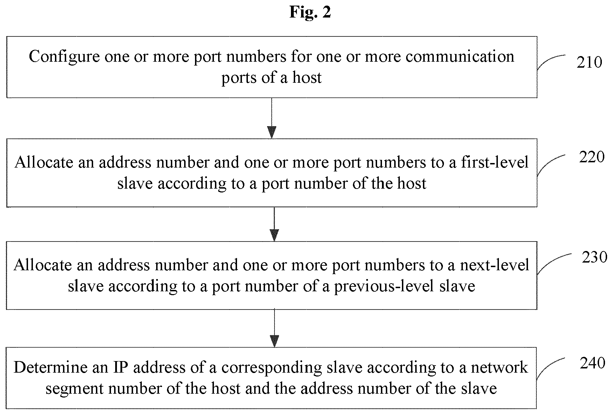

It should be understood that, although the operations in the flowchart of Fig. 2 are displayed in sequence as indicated by the arrows, the operations are not necessarily executed in sequence as indicated by the arrows. Unless otherwise specified herein, the execution of these operations is not strictly limited in order, and these operations can be executed in other orders. Furthermore, at least some of the operations in Fig. 2 can comprise a plurality of sub-operations or a plurality of stages. These sub-operations or stages are not necessarily executed at the same time, but can be executed at different times. The execution order of these sub-operations or stages is also not necessarily in sequence, and the sub-operations or stages can be executed in turn or alternately with other operations or at least some of the sub-operations or stages of other operations.

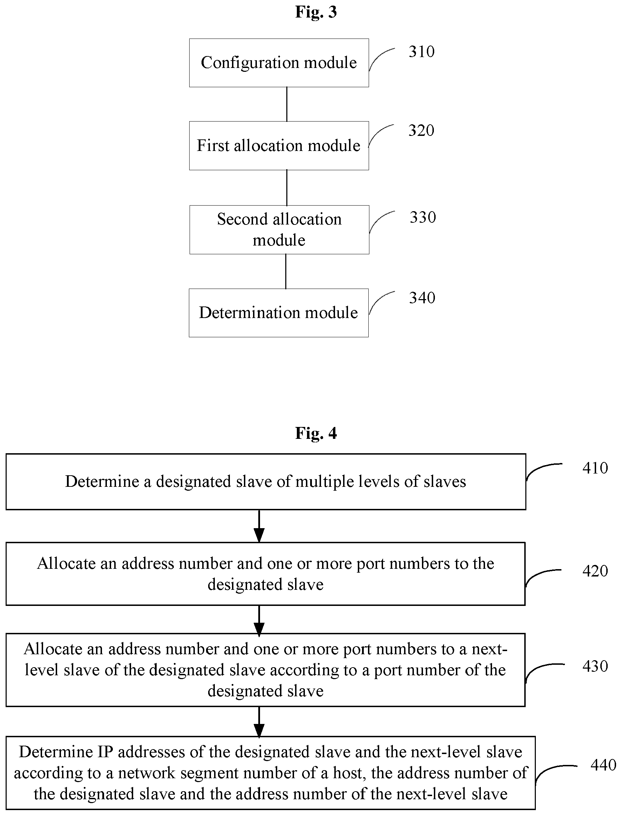

In an embodiment, as shown in Fig. 3, a device for IP address allocation and topology management in a DAS system is provided, comprising: a configuration module 310, a first allocation module 320, a second allocation module 330 and a determination module 340.

The configuration module 310 is adapted to configure one or more port numbers for one or more communication ports of the host 110.

The first allocation module 320 is allocate an address number and one or more port numbers to a first-level slave 121 according to a port number of the host 110.

The second allocation module 330 is adapted to allocate an address number and one or more port numbers to a next-level slave according to a port number of a previous-level slave.

The determining module 340 is adapted to determine an IP address of a corresponding slave according to a network segment number of the host and the address number of the slave.

In an embodiment, the configuration module 310 is adapted to acquire a type of an IP address according to the network segment number of the host of the distributed antenna system; and
configure, according to the type of the IP address and according to a first preset rule, one or more port numbers for all of the one or more communication ports of the host 110.

In an embodiment, the first allocation module 320 is adapted to allocate the address number to the first-level slave 121 according to the port number of the host 110; and
configure one or more port numbers for one or more communication ports of the first-level slave 121 according to the address number of the first-level slave 121.

In an embodiment, the first allocation module 310 is adapted to use the port number of a port, to which of the first-level slave 121 is connected, of the host 110 as the address number of the first-level slave 121.

In an embodiment, in a case where the first-level slave 121 is an expansion unit, the first allocation module 310 is adapted to configure one or more port numbers for all of the one or more communication ports of the expansion unit according to a second preset rule; and
in a case where the first-level slave 121 is a remote unit, the first allocation module 310 is adapted to determine the address number of the first-level slave 121 as the port number of the communication port of the first-level slave 121.

In an embodiment, the second allocation module 320 is adapted to allocate an address number to a next-level slave according to a port number of a previous-level slave, and configure one or more port numbers for one or more communication ports of the next-level slave according to the address number of the next-level slave.

In an embodiment, the host 110 in the device for IP address allocation and topology management in a DAS system is adapted to acquire IP addresses of a plurality of slaves, and acquire topological locations of the plurality of slaves according to the IP addresses of the plurality of slaves.

In an embodiment, in a case where the topological location of a slave is updated, the host 110 is adapted to acquire the updated topological location of the slave.

In an embodiment, the graphical user interface of the host 110 reads the topological locations of a plurality of slaves managed by the host 110, and generates a topological structure diagram of the distributed antenna system according to the topological locations.

The route jumping functions of the host 110 and the plurality of slaves are configured, so as to acquire graphical user interfaces of the plurality of slaves according to the topological structure diagram.

For the specific limitations on the device for IP address allocation and topology management in a DAS system, reference can be made to the limitations on the method for IP address allocation and topology management in a DAS system, and details are not described herein again. All or some of the modules in the described device for IP address allocation can be implemented by software, hardware, or a combination thereof. The described modules may be embedded in or independent from a processor in a computer device in a hardware form, and may also be stored in a memory in the computer device in a software form, so that the processor can invoke and execute operations corresponding to the described modules.

In an embodiment, a readable storage medium is provided, on which a data processing program is stored, and the data processing program is used for causing a computer to perform the following operations:
configuring one or more port numbers for one or more communication ports of a host 110;
allocating an address number and one or more port numbers to a first-level slave according to a port number of the host 110;
allocating an address number and one or more port numbers to a next-level slave according to a port number of a previous-level slave; and
determining an IP address of a corresponding slave according to a network segment number of the host 110 and the address number of the slave.

A person having ordinary skill in the art can understand that all or some of the processes of the methods in the described embodiments can be implemented by a computer program instructing relevant hardware. The computer program can be stored in a non-volatile computer-readable storage medium. When the computer program is executed, the processes of the methods in the described embodiments can be included. Any reference to memory, storage, database, or other media used in the embodiments provided herein may include non-volatile and/or volatile memory. The non-volatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. By way of illustration but not limitation, RAM is available in a variety of forms, such as static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), memory bus (Rambus) direct RAM (RDRAM), direct memory bus dynamic RAM (DRDRAM), and memory bus dynamic RAM (RDRAM), etc.

Fig. 4 is a flowchart for IP address allocation in a distributed antenna system according to an embodiment. As shown in Fig. 4, a method for IP address allocation in a distributed antenna system comprises operation 410 to operation 440.

At 410, a designated slave of multiple levels of slaves is determined.

At 420, an address number and one or more port numbers are allocated to the designated slave.

In an embodiment, the operation that an address number and one or more port numbers are allocated to the designated slave comprises: a port number allocated to a previous-level slave of the designated slave is acquired; and an address number and one or more port numbers are allocated to the designated slave according to the port number of the previous-level slave.

In an embodiment, the operation that an address number and one or more port numbers are allocated to the designated slave further comprises: it is determined whether the designated slave is a first-level slave of the multiple levels of slaves; and in a case where the designated slave is the first-level slave, an address number and one or more port numbers are allocated to the designated slave according to the port number of the host.

In an embodiment, the operation that an address number and one or more port numbers are allocated to the designated slave further comprises: it is determined whether the designated slave is a first-level slave of the multiple levels of slaves; and in a case where the designated slave is the first-level slave, an address number and one or more port numbers are allocated to the designated slave according to the port number of the host.

The operation that one or more port numbers are configured for one or more communication ports of the host comprises: the type of the IP address is acquired according to a network segment number of the host of the distributed antenna system; and according to the type of the IP address, one or more port numbers are configured for all of the one or more communication ports of the host according to a first preset rule.

In an embodiment, the operation that an address number and one or more port numbers are allocated to a first-level slave according to a port number of the host comprises: an address number is allocated to a first-level slave according to the port number of the host; and one or more port numbers are configured for one or more communication ports of the first-level slave according to the address number of the first-level slave.

The operation that an address number is allocated to a first-level slave according to a port number of the host comprises: the port number of a port, to which the first-level slave is connected, of the host is used as the address number of the first-level slave.

The operation that one or more port numbers are configured for one or more communication ports of the first-level slave according to the address number of the first-level slave comprises: in a case where the first-level slave is an expansion unit, one or more port numbers are configured for all of the one or more communication ports of the expansion unit according to a second preset rule; and in a case where the first-level slave is a remote unit, a port number is configured for a communication port of the remote unit according to a third preset rule.

The operation that an address number and one or more port numbers are allocated to a next-level slave according to a port number of a previous-level slave comprises: an address number is allocated to a next-level slave according to a port number of a previous-level slave; and one or more port numbers are configured for one or more communication ports of the next-level slave according to the address number of the next-level slave.

At 430, an address number and one or more port numbers are allocated to a next-level slave of the designated slave according to a port number of the designated slave.

At 440, IP addresses of the designated slave and the next-level slave are determined according to the network segment number of the host, the address number of the designated slave and the address number of the next-level slave.

After determining an IP address of a corresponding slave according to the network segment number of the host and the address number of the slave, the method further comprises: IP addresses of a plurality of slaves are acquired; and topological locations of the plurality of slaves are acquired according to the IP addresses of the plurality of slaves.

After acquiring the topological location of a slave according to the IP address of the slave, the method further comprises: topological locations of a plurality of slaves managed by the host are read; a topological structure diagram of the distributed antenna system is generated according to the topological locations; and route jumping functions of the host and the plurality of slaves are configured, so as to acquire graphical user interfaces corresponding to the plurality of slaves according to the topological structure diagram.

A person having ordinary skill in the art can understand that all or some of the processes of the methods in the described embodiments can be implemented by a computer program instructing relevant hardware. The computer program can be stored in a non-volatile computer-readable storage medium. When the computer program is executed, the processes of the methods in the described embodiments may be executed. Any reference to memory, storage, database, or other media used in the embodiments provided herein may include non-volatile and/or volatile memory. The non-volatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. By way of illustration but not limitation, RAM is available in a variety of forms, such as static RAM (SRAM), dynamic RAM (DRAM), synchronous DRAM (SDRAM), double data rate SDRAM (DDR SDRAM), enhanced SDRAM (ESDRAM), synchronous link DRAM (SLDRAM), memory bus (Rambus) direct RAM (RDRAM), direct memory bus dynamic RAM (DRDRAM), and memory bus dynamic RAM (RDRAM), etc.

Various technical features of the described embodiments can be arbitrarily combined, and in order to make the description brief, not all possible combinations of the technical features in the described embodiments are described. However, as long as there is no contradiction between the combinations of these technical features, all of the combinations should be considered to belong to the scope of the description.

The above-mentioned embodiments merely illustrate several implementations of the present disclosure, and the description thereof is relatively specific and detailed, but it should not be understood as a limitation on the scope of the invention paten. It should be noted that, for a person having ordinary skill in the art, various modifications and improvements can be made without departing from the concept of the present disclosure, and all these modifications and improvements belong to the scope of protection of the present disclosure. Therefore, the scope of protection of the present disclosure should be defined by the claims.

### Industrial Applicability

The solution provided in the embodiments of the present disclosure can be applied to an IP address allocation and topology management process in a DAS system, specifically comprising: configuring one or more port numbers for one or more communication ports of a host; allocating an address number and one or more port numbers to a first-level slave according to a port number of the host; allocating an address number and one or more port numbers to a next-level slave according to a port number of a previous-level slave; and determining an IP address of a corresponding slave according to a network segment number of the host and the address number of the slave. In the method for IP address allocation and topology management in a DAS system, an IP address is allocated to a slave according to a port number of a port to which the slave is connected, so that the topological location of the slave in the distributed antenna system can be directly acquired according to the IP address of the slave.

## Claims

1. A method for Internet Protocol, IP, address allocation in a distributed antenna system, the distributed antenna system comprising a host and multiple levels of slaves connected to the host, and the method comprising:
configuring one or more port numbers for one or more communication ports of the host;
allocating an address number and one or more port numbers to a first-level slave according to a port number of the host;
allocating an address number and one or more port numbers to a next-level slave according to a port number of a previous-level slave, wherein the next-level slave comprises any slave except the first-level slave; and
determining an IP address of a corresponding slave according to a network segment number of the host and the address number of the slave.

2. The method according to claim 1, wherein configuring one or more port numbers for one or more communication ports of the host comprises:
acquiring a type of an IP address according to the network segment number of the host of the distributed antenna system; and
configuring, according to the type of the IP address and according to a first preset rule, one or more port numbers for all of the one or more communication ports of the host.

3. The method according to claim 1, wherein allocating an address number and one or more port numbers to a first-level slave according to a port number of the host comprises:
allocating the address number to the first-level slave according to the port number of the host; and
configuring one or more port numbers for one or more communication ports of the first-level slave according to the address number of the first-level slave.

4. The method according to claim 1, wherein allocating the address number to the first-level slave according to the port number of the host comprises:
using the port number of a port, to which the first-level slave is connected, of the host as the address number of the first-level slave.

5. The method according to claim 1, wherein configuring one or more port numbers for one or more communication ports of the first-level slave according to the address number of the first-level slave comprises:
in a case where the first-level slave is an expansion unit, configuring one or more port numbers for all of the one or more communication ports of the expansion unit according to a second preset rule; and
in a case where the first-level slave is a remote unit, configuring a port number for a communication port of the remote unit according to a third preset rule.

6. The method according to claim 1, wherein allocating an address number and one or more port numbers to a next-level slave according to a port number of a previous-level slave comprises:
allocating the address number to the next-level slave according to the port number of the previous-level slave; and
configuring one or more port numbers for one or more communication ports of the next-level slave according to the address number of the next-level slave.

7. The method according to claim 1, wherein after determining an IP address of a corresponding slave according to a network segment number of the host and the address number of the slave, the method further comprises:
acquiring IP addresses of a plurality of slaves; and
acquiring topological locations of the plurality of slaves according to the IP addresses of the plurality of slaves.

8. The method according to claim 7, wherein after acquiring topological locations of the plurality of slaves according to the IP addresses of the plurality of slaves, the method further comprises:
reading topological locations of the plurality of slaves managed by the host;
generating a topological structure diagram of the distributed antenna system according to the topological locations; and
configuring a route jumping function of the host and the plurality of slaves, so as to acquire graphical user interfaces corresponding to the plurality of slaves according to the topological structure diagram.

9. A method for Internet Protocol, IP, address allocation in a distributed antenna system, the distributed antenna system comprising a host and multiple levels of slaves connected to the host, and the method comprising:
determining a designated slave of the multiple levels of slaves;
allocating an address number and one or more port numbers to the designated slave;
allocating, according to a port number of the designated slave, an address number and one or more port numbers to a next-level slave of the designated slave; and
determining IP addresses of the designated slave and the next-level slave according to a network segment number of the host, the address number of the designated slave and the address number of the next-level slave.

10. The method according to claim 9, wherein allocating an address number and one or more port numbers to the designated slave comprises:
acquiring a port number allocated to a previous-level slave of the designated slave; and
allocating the address number and the one or more port numbers to the designated slave according to the port number of the previous-level slave.

11. The method according to claim 9, wherein allocating an address number and one or more port numbers to the designated slave comprises:
determining whether the designated slave is a first-level slave of the multiple levels of slaves; and
in a case where the designated slave is the first-level slave, allocating the address number and the one or more port numbers to the designated slave according to a port number of the host.

12. A device for Internet Protocol, IP, address allocation in a distributed antenna system, the distributed antenna system comprising a host and multiple levels of slaves connected to the host, and the device comprising:
a configuration module, adapted to configure one or more port numbers for one or more communication ports of the host;
a first allocation module, adapted to allocate an address number and one or more port numbers to a first-level slave according to a port number of the host; and
a second allocation module, adapted to allocate an address number and one or more port numbers to a next-level slave according to a port number of a previous-level slave, wherein the next-level slave comprises any slave except the first-level slave; and
a determination module, adapted to determine an IP address of a corresponding slave according to a network segment number of the host and the address number of the slave.

13. A non-volatile storage medium, in which a data processing program is stored, and the data processing program is used for enabling a computer to execute the method according to any one of claims 1 to 8.
